# EUROPEAN PATENT APPLICATION

(11) **EP 4 482 105 A1**
(43) Date of publication of application: **25.12.2024**
(21) Application number: 24163776.8
(22) Date of filing: 15.03.2024
(51) Int. Cl.: H04L 41/16, H04L 41/142, H04L 43/08, H04W 24/02

(54) **AI/ML-RELATED OPERATIONAL STATISTICS/KPIS**

(30) Priority: 19.06.2023 FI 20235683
(71) Applicant: Nokia Solutions and Networks Oy, 02610 Espoo (FI)
(72) Inventor: SUBRAMANYA, Tejas, Munich (DE); SWAMINATHAN, Sivaramakrishnan, Bangalore (IN)
(74) Representative: Nokia EPO representatives

(57) **Abstract**

Described herein is a first network element configured for supporting collection and/or evaluation of artificial intelligence / machine learning (AI/ML) -related operational statistics in a communications network, the first network element comprising: at least one processor; and at least one memory storing instructions that, when executed by the at least one processor, cause the first network element at least to: determine one or more AI/MI,-related operational statistics associated with the first network element; and report the determined one or more AI/ML-related operational statistics to a second network element of the communications network.

## Description

### TECHNOLOGY

The present disclosure generally relates to AI (Artificial Intelligence) / ML (Machine Learning) -related techniques, and particularly relates to techniques for obtaining and analyzing AI/ML-related operational statistics/KPIs in a communications network.

### BACKGROUND

Any discussion of the background art throughout the specification should in no way be considered as an admission that such art is widely known or forms part of common general knowledge in the field.

ML frameworks and techniques are being increasingly deployed across the 5G networks (including, for example, RAN (Radio Access Network), core network, as well as management systems) and it is expected to scale up as the technology further grows, e.g., to 5G advanced networks, 6G networks, or the like. In addition, there is also general interest from the telecommunication community in different standards forums to study and standardize different ML frameworks and functionalities and to leverage the capability of ML to improve the use cases of respective standard bodies and different working groups within them. For example, the 3GPP (3rd Generation Partnership Project) has also been actively involved in studying different aspects of ML capabilities and its applicability in different working groups.

Network entities across RAN and core are adopting AI/ML framework, also in the standards. Generally speaking, each network entity may train, retrain, and/or deploy multiple ML models for inference. It may also be considered equally important to analyze the feasibility of the framework by providing appropriate aiding information to understand and improve the efficiency of AI/ML usage in different AI/ML-enabled network entities.

Towards 5G-Advanced and 6G, it is anticipated that a lot of RAN, core and management use cases may be driven by AI/ML-based analytics. Therefore, a significantly large number of AI/ML models may be trained and/or deployed for inference directly in network entities, such as UEs (User Equipments), base stations (e.g., gNodeBs), core network functions and/or management functions. For instance, a base station may have a number of (e.g., 3) different AI/ML models trained and/or deployed for inference, e.g., one for CSI compression, one for beam management, and one for positioning.

However, currently, there is no general means for the OAM (Operations, Administration and Maintenance) entity to collect AI/ML-related operational statistic(s) and/or KPI(s) from the above-mentioned network entities/node. Consequently, this lack of information does not allow the OAM to oversee the usage of AI/ML models in a particular network entity or a particular geographical location or a particular technology domain or end-to-end networks.

Therefore, in view of at least some or all of the issues discussed above, there appears to exist a general need to propose AI/ML-related operational statistics/KPIs for the above-mentioned network entities that may need to be collected (e.g., by the OAM or any other suitable network node/entity), particularly in an efficient, flexible yet reliable manner, thereby facilitating the making of an informed decision regarding AI/ML-based operations for end-to-end network automation.

### SUMMARY

In accordance with an aspect of the present disclosure, there is provided a first network element configured for supporting collection and/or evaluation of artificial intelligence / machine learning (AI/ML) -related operational statistics in a communications network, the first network element comprising:
at least one processor; and
at least one memory storing instructions that, when executed by the at least one processor, cause the first network element at least to:
   determine one or more AI/ML-related operational statistics associated with the first network element; and
   report the determined one or more AI/ML-related operational statistics to a second network element of the communications network.

In some examples, the one or more AI/ML-related operational statistics are reported to the second network element in a periodic manner:
In some examples, the first network element is further caused to, before reporting the one or more AI/ML-related operational statistics to the second network element:
   receive, from the second network element, a request for reporting one or more AI/ML-related operational statistics associated with the first network element; and
wherein the one or more AI/ML-related operational statistics are reported in response to the received request.

In some examples, the request for reporting the one or more AI/ML-related operational statistics comprises information indicative of at least one to-be-reported AI/ML-related operational statistic, and/or information indicative of a respective reporting characteristic; and wherein the reporting characteristic includes at least one of: a reporting periodicity, a reporting threshold, or a reporting format.

In some examples, the first network element is further caused to:
store the determined one or more AI/ML-related operational statistics locally and/or in a predetermined network location.

In some examples,
the first network element is a user equipment (UE) and the second network element is a base station or a core network entity; or
the first network element is a base station or a core network entity or a network management entity, and the second network element is an operations, administration and maintenance (OAM) entity.

In some examples,
the first network element is the base station; and
the first network element is further caused to:
   receive, from at least one UE, one or more AI/ML-related operational statistics associated with the at least one UE;
   report the received one or more AI/ML-related operational statistics that are associated with the at least one UE to the OAM entity, or, in case of a UE handover, to a corresponding target base station; and
   optionally, store the received one or more AI/ML-related operational statistics associated with the at least one UE locally and/or in a predetermined network location.

In some examples, the AI/ML-related operational statistics comprise at least one of:
a count of AI/ML models currently being trained within or acting on a managed object, a geographical area, or a technology domain;
a count of AI/ML models currently being deployed for inference within or acting on a managed object, a geographical area, or a technology domain;
a count of AI/ML models active and/or inactive for a predetermined time period within or acting on a managed object, a geographical area, or a technology domain;
a count of inferences made by AI/ML models within or acting on a managed object, a geographical area, or a technology domain;
a count of inferences made by AI/ML models within or acting on a managed object, a geographical area, or a technology domain that were put to use;
time since the last training or updating of AI/ML models within or acting on a managed object, a geographical area, or a technology domain;
time since the last inference made by AI/ML models within or acting on a managed object, a geographical area, or a technology domain;
time since the last inference made by AI/ML models within or acting on a managed object, a geographical area, or a technology domain that was put to use;
types of AI/ML models within or acting on a managed object, a geographical area, or a technology domain;
quality of service (QoS) and/or quality of trustworthiness (QoT) metrics of AI/ML models within or acting on a managed object, a geographical area, or a technology domain;
computation usage, memory usage and/or energy usage of AI/ML models within or acting on a managed object, a geographical area, or a technology domain;
an AI/ML model usage index indicative of a ratio of a count of inferences made by an AI/ML model against a total count of inferences made by AI/ML models deployed within or acting on a managed object, a geographical location, or a technology domain;
an average AI/ML model usage index indicative of a ratio of a count of inferences made by AI/ML models against a total count of AI/ML models deployed within or acting on a managed object, a geographical location, or a technology domain; or
an AI/ML model inference usage index indicative of a ratio of a count of inferences that were put to use against a count of inferences that were made by AI/ML models deployed within or acting on a managed object, a geographical location, or a technology domain,
wherein the managed object includes a UE, a base station, a core network entity, or a network management entity; and the technology domain includes a radio access network (RAN) domain, a core network domain, or a management domain.

In accordance with another aspect of the present disclosure, there is provided a second network element configured for supporting collection and/or evaluation of artificial intelligence / machine learning (AI/ML) -related operational statistics in a communications network, the second network element comprising:
at least one processor; and
at least one memory storing instructions that, when executed by the at least one processor, cause the second network element at least to:
   send, to at least one first network element of the communications network, a request for reporting one or more AI/ML-related operational statistics associated with the respective first network element; and
   receive, from the respective first network element, the one or more AI/ML-related operational statistics.

In some examples, the request for reporting the AI/ML-related operational statistics comprises information indicative of at least one to-be-reported AI/ML-related operational statistic, and/or information indicative of a respective reporting characteristic; and wherein the reporting characteristic includes at least one of: a reporting periodicity, a reporting threshold, or a reporting format.

In some examples, the second network element is further caused to:
store the received one or more AI/ML-related operational statistics locally and/or in a predetermined network location.

In some examples,
the first network element is a user equipment (UE) and the second network element is a base station or a core network entity; or
the first network element is a base station or a core network entity or a network management entity, and the second network element is an operations, administration and maintenance (OAM) entity.

In some examples,
the second network element is the base station; and
the second network element is further caused to:
   report the received one or more AI/ML-related operational statistics associated with the UE to the OAM entity, or, in case of a UE handover, to a corresponding target base station; and
   optionally, store the received one or more AI/ML-related operational statistics associated with the UE locally and/or in a predetermined network location.

In some examples,
the second network element is the base station; and
the second network element is further caused to:
   receive, from the OAM entity, a request for reporting one or more AI/ML-related operational statistics;
   determine one or more AI/ML-related operational statistics associated with the second network element;
   report, to the OAM entity, the determined one or more AI/ML-related operational statistics associated with the second network element; and
   optionally, report, to the OAM entity, one or more AI/ML-related operational statistics reported by at least one UE that is associated with the second network element.

In some examples,
the second network element is the OAM entity; and
the second network element is further caused to:
   perform AI/ML operation evaluation based on the one or more AI/ML-related operational statistics reported by the at least one first network element, for enabling the OAM entity to make an informed decision regarding AI/ML-based operations for end-to-end network automation;
   wherein, particularly,
   the operation evaluation involves determining at least one of: overall AI/ML inventory, overall AI/ML usage efficiency key performance indicators, KPIs, overall network automation level resulting from AI/ML, overall trustworthiness level of AI/ML, or overall computational, memory and/or energy usage resulting from AI/ML; and
   the informed decision involves at least one of: AI/ML model book-keeping, AI/ML model auditing, AI/ML model retraining, AI/ML model updating, AI/ML model activation/deactivation, AI/ML model performance measurement, or AI/ML model trustworthiness measurement.

Further, according to some example embodiments of the present disclosure, there is provided a method of a first network element for supporting collection and/or evaluation of artificial intelligence / machine learning (AI/ML) -related operational statistics in a communications network.

According to some example embodiments of the present disclosure, there is provided a method of a second network element for supporting collection and/or evaluation of artificial intelligence / machine learning (AI/ML) -related operational statistics in a communications network.

According to some further example embodiments of the present disclosure, there is provided a computer program comprising instructions for causing an apparatus (e.g., a first network element or a second network element) to perform the respective methods as disclosed in the present disclosure.

According to yet some example embodiments of the present disclosure, there is also provided computer-readable storage medium storing the computer program according to the preceding example embodiments.

Moreover, according to some example embodiments, there is provided a memory storing computer readable instructions for causing an apparatus to perform the method as disclosed in the present disclosure.

In addition, according to some example embodiments, there is also provided a first network element configured for supporting collection and/or evaluation of artificial intelligence / machine learning (AI/ML) -related operational statistics in a communications network, and the first network element comprising respective suitable means configured for performing the respective steps as disclosed in the present disclosure.

Similarly, according to some example embodiments, there is provided a second network element configured for supporting collection and/or evaluation of artificial intelligence / machine learning (AI/ML) -related operational statistics in a communications network, and the second network element comprising respective suitable means configured for performing the respective steps as disclosed in the present disclosure.

Yet additionally, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use and is applicable in broader contexts.

Notably, it is understood that methods according to the present disclosure relate to methods of operating the apparatuses (or systems) according to the above example embodiments and variations thereof, and that respective statements made with regard to the apparatuses (or systems) likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processors, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an example of a high-level functional framework for ML based model training and deployment according to some examples of the present disclosure,
Figure 2 schematically illustrates an example of a high-level system overview according to some example embodiments of the present disclosure,
Figure 3 schematically illustrates an example of a signaling/messaging sequence flow according to some example embodiments of the present disclosure, and
Figure 4 schematically illustrates an example of an implementation of an apparatus according to some example embodiments of the present disclosure.

### DESCRIPTION OF EXAMPLE EMBODIMENTS

Notably, identical or like reference numbers used in the figures of the present disclosure may, unless indicated otherwise, indicate identical or like elements. Similarly, identical or like messages (as well as the contents comprised therein) used in the figures of the present disclosure may, unless indicated otherwise, indicate identical or like messages (and the contents therein), such that repeated description thereof may be omitted for reasons of conciseness. Further, it may be worthwhile to note that, unless specifically indicated otherwise, the character "/" used throughout the present application may generally indicate an "or" relationship or an "and/or" relationship between the associated objects, depending on various circumstances and/or contexts as may be clearly understood and appreciated by the skilled person.

In the following, different exemplifying embodiments will be described using, as an example of a communication network to which examples of embodiments may be applied, a communication network architecture based on 3GPP standards for a communication network, such as a 5G/NR/IoT, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   ∘ The function split in this option is similar to the 1A architecture in DC. RRC is in the central unit. PDCP, RLC, MAC, physical layer and RF are in the distributed unit.
Option 2 (3C-like split):
   ∘ The function split in this option is similar to the 3C architecture in DC. RRC and PDCP are in the central unit. RLC, MAC, physical layer and RF are in the distributed unit.
Option 3 (intra RLC split):
   ∘ Low RLC (partial function of RLC), MAC, physical layer and RF are in the distributed unit. PDCP and high RLC (the other partial function of RLC) are in the central unit.
Option 4 (RLC-MAC split):
   ∘ MAC, physical layer and RF are in the distributed unit. PDCP and RLC are in the central unit.
Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
∘ The physical layer offers to the MAC sublayer transport channels;
∘ The MAC sublayer offers to the RLC sublayer logical channels;
∘ The RLC sublayer offers to the PDCP sublayer RLC channels;
∘ The PDCP sublayer offers to the SDAP sublayer radio bearers;
∘ The SDAP sublayer offers to 5GC QoS flows;
∘ Comp. refers to header compression and Segm. To segmentation;
∘ Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g., RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
∘ store the AS context;
∘ transfer unicast data to/from the UE;
∘ monitor control channels associated with the shared data channel to determine if data is scheduled for the data channel;
∘ provide channel quality and feedback information;
∘ perform neighboring cell measurements and measurement reporting.
∘

The RRC protocol includes e.g. the following main functions:
∘ RRC connection control;
∘ measurement configuration and reporting;
∘ establishment/modification/release of measurement configuration (e.g., intra-frequency, inter-frequency and inter-RAT measurements);
∘ setup and release of measurement gaps;
∘ measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g., an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that, in the present specification, processing portions should not be only considered to represent physical portions of one or more processors but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

Now, before going into detail about the example embodiments of the present disclosure, it may still be worthwhile to briefly go through some exemplary general aspects of AI and/or ML related techniques/procedures that may be considered useful for understanding the present disclosure.

As mentioned above, ML frameworks and techniques are being increasingly deployed across the 5G networks (including for example RAN, core network, as well as management system/functionality) and it is expected to scale up as the technology further grows, e.g., to 5G advanced networks, 6G networks, or the like. In addition, there is also general interest from the telecommunication community in different standards forums to study and standardize different ML frameworks and functionalities and to leverage the capability of ML to improve the use cases of respective standard bodies and different working groups within them. For example, 3GPP has also been actively involved in studying different aspects of ML capabilities and its applicability in different working groups. To name a few:
- SA (Service and System Aspects) 5 deals with the WI (Work Item) on the PM (Performance Management) and KPI (Key Performance Indicator) enhancements for 5G and advanced systems, generally focusing on specifying the required PMs and KPIs for measuring the performance of different network entities.
- The study on SA5 generally focuses on the management aspects of training, re-training, testing and inference making.
- 3GPP SA2 generally deals with some of the advanced topics on ML such as enhancements in trained ML model sharing, support of FL (Federated Learning) in 5C core.

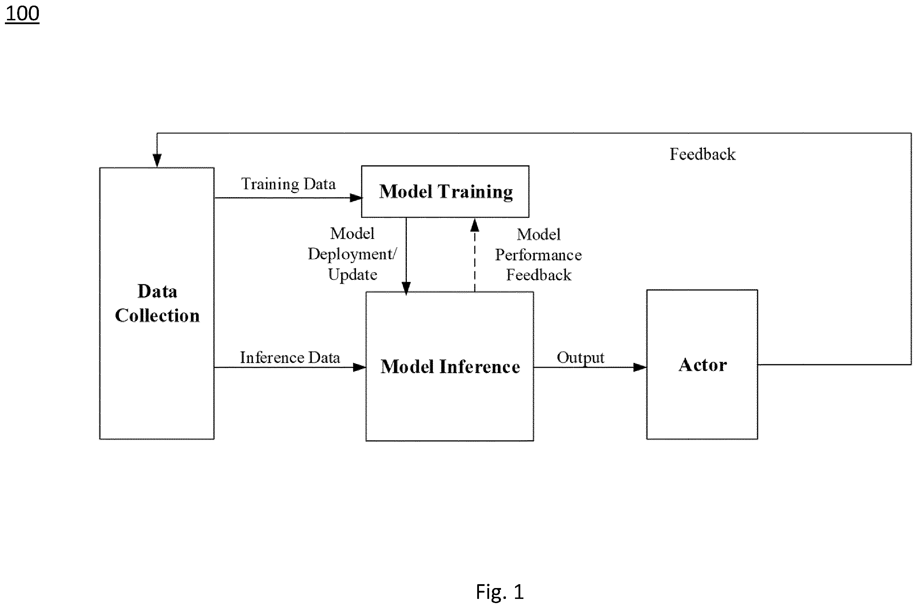

In addition, the RAN3 study item on enhancements of data collection for NR and EN-DC" has described the functional framework for RAN Intelligence, which is schematically shown in Figure 1. Since this functional framework is considered to be readily understandable by the skilled person, detailed descriptions thereof are thus omitted for the sake of conciseness. In a broad sense, the framework generally proposes two options for ML model training and deployment. The first option is to train the ML model at RAN and deploy the same model for inference in the RAN itself. The second option is to train the ML model at OAM and deploy the model for inference at RAN. In either of these options, the inference is happening at the RAN. Thereafter, SA5 performed a study to understand the implications of the RAN3 study described above to SA5.

Network entities across RAN and core are adopting AI/ML framework, also in the standards. Generally speaking, each network entity may train, retrain, and/or deploy multiple ML models for inference. It may also be considered as equally important to analyze the feasibility of the framework by providing appropriate aiding information to understand and improve the efficiency of AI/ML usage in different AI/ML-enabled network entities.

Towards 5G-Advanced and 6G, it may be anticipated that a lot of RAN, core and management use cases may be driven by AI/ML-based analytics. Therefore, a significantly large number of AI/ML models may be trained and/or deployed for inference directly in network entities, such as UEs, base stations (e.g., gNodeBs), core network functions and/or management functions.

The RAN3 and the SA5 have studied three use cases for data collection to support RAN Intelligence using ML, network energy saving, load balancing and mobility optimization. The ML models realizing these use cases are deployed at the RAN. It is required to understand the operational efficiency of these models. For instance, the ML model deployed for network energy saving generally proposes certain recommendations. These recommendations may or may not be honored by RAN for various reasons based on confidence, based on the network entities on which the recommendations are made. Generally speaking, if the majority of the inferences are not honored for one reason or the other, the corresponding ML model is not operationally efficient.

It is to be noted that, in some possible implementations, each of these network entities may have more than one AI/ML model being trained and/or deployed for inference within them, for e.g., the gNodeB may have three different AI/ML models trained and/or deployed for inference, i.e., one each for CSI compression, beam management and positioning, respectively. Alternatively, in some other possible implementations, the AI/ML models may be trained within a non-3GPP entity (e.g., a cloud server or the like) but only deployed for inference within the above-mentioned network entities. Moreover, in some further possible implementations, the AI/ML models may be trained and deployed for inference within a non-3GPP entity (e.g., a cloud server or the like) but only the decisions taken by the AI/ML models are sent to be executed by the above-mentioned network entities, i.e., the network entities may only take the role of an actor (which may be UE, or any suitable network entity/element, see for example also the functional framework of Figure 1 for reference).

However, as noted above, there is no general means for the OAM entity to collect AI/ML-related operational statistic(s) and/or KPI(s) from the above-mentioned network entities/node at the moment. As will be described in more detail below, this lack of information does not allow the OAM to oversee the usage of AI/ML models in a particular network entity or a particular geographical location or a particular technology domain or end-to-end networks, such as (but is certainly not limited thereto) overall AI/ML inventory for bookkeeping, overall AI/ML usage efficiency KPIs, overall network automation level resulting from AI/ML, overall trustworthiness level of AI/ML, overall computational/memory/energy usage resulting from AI/ML, etc., and thereby being able to make an informed decision regarding the optimization of AI/ML-based operations across end-to-end network automation.

With the above in mind, in a broad sense, the present disclosure generally proposes to introduce several AI/ML-related operational statistics/KPIs for the above-mentioned network entities that may need to be collected by OAM to make an informed decision regarding AI/ML-based operations for end-to-end network automation. The proposed measurements and/or the KPI(s) may be realized for all the use cases for which the ML models are deployed in an entity. Also, they may specifically refer to a specific use case.

Some illustrative (non-limiting) AI/ML-related operational statistics/KPIs may include at least one of the following possibilities:
1. The number (count) of AI/ML models currently being trained (in other words, the training is ongoing) within a managed object, such as:
   - the number of AI/ML models currently being trained in a UE (or in some possible example implementations, for all UEs associated to the network);
   - the number of AI/ML models currently being trained in a base station, such as a gNodeB or the like (or in some possible example implementations, for all base stations in the network);
   - the number of AI/ML models currently being trained in a core network function (or in some possible example implementations, for all core network functions in the network); or
   - the number of AI/ML models currently being trained in a management function (or in some possible example implementations, for all management functions in the network).
2. The number of AI/ML models currently being trained within a geographical area (e.g., applicable for all managed objects therein).
3. The number of AI/ML models currently being trained within a technology domain (which, as may be understood and appreciated by the skilled person, may generally refer to RAN, Core or Management domains, or the like).
4. The number of AI/ML models currently being deployed for inference (in other words, training has been finished) within a managed object, such as:
   - the number of AI/ML models currently being deployed for inference in a UE (or in some possible example implementations, for all UEs associated to the network);
   - the number of AI/ML models currently being deployed for inference in a base station, such as a gNodeB or the like (or in some possible example implementations, for all base stations in the network);
   - the number of AI/ML models currently being deployed for inference in a core network function (or in some possible example implementations, for all core network functions in the network); or
   - the number of AI/ML models currently being deployed for inference in a management function (or in some possible example implementations, for all management functions in the network).
5. The number of AI/ML models currently being deployed for inference within a geographical area (e.g., applicable for all managed objects therein).
6. The number of AI/ML models currently being deployed for inference within a technology domain.
7. The number of active and inactive (which may for example be determined if not used for a long time) AI/ML models within a managed object, such as:
   - the number of active and inactive AI/ML models in a UE (or in some possible example implementations, for all UEs associated to the network);
   - the number of active and inactive AI/ML models in a base station, such as a gNodeB or the like (or in some possible example implementations, for all base stations in the network);
   - the number of active and inactive AI/ML models in a core network function (or in some possible example implementations, for all core network functions in the network); or
   - the number of active and inactive AI/ML models in a management function (or in some possible example implementations, for all management functions in the network).
8. The number of active and inactive (e.g., not used for a long time) AI/ML models within a geographical area (e.g., applicable for all managed objects therein).
9. The number of active and inactive (e.g., not used for a long time) AI/ML models within a technology domain.
10. The number of inferences made by AI/ML models within a managed object (for instance, within a predetermined/preconfigured time period, e.g., in the last 'N' time units), such as:
   - the number of inferences made by AI/ML models in a UE (or in some possible example implementations, for all UEs associated to the network);
   - the number of inferences made by AI/ML models in a base station, such as a gNodeB or the like (or in some possible example implementations, for all base stations in the network);
   - the number of inferences made by AI/ML models in a core network function (or in some possible example implementations, for all core network functions in the network); or
   - the number of inferences made by AI/ML models in a management function (or in some possible example implementations, for all management functions in the network).
11. The number of inferences made by AI/ML models (e.g., in the last 'N' time units) within a geographical area (e.g., applicable for all managed objects therein).
12. The number of inferences made by AI/ML models (e.g., in the last 'N' time units) within a technology domain.
13. The number of inferences made by AI/ML models within a managed object that were put to use, for example on the actor (for instance, within a predetermined/preconfigured time period, e.g., in the last 'N' time units). As an illustrative (non-limiting) example, in some possible implementations, if a (determined or calculated) confidence value of the inference is low, then the inference may not be used at all. This may include, for example:
   - the number of inferences made by AI/ML models in a UE that were put to use on the actor (or in some possible example implementations, for all UEs associated to the network);
   - the number of inferences made by AI/ML models in a base station, such as a gNodeB or the like, that were put to use on the actor (or in some possible example implementations, for all base stations in the network);
   - the number of inferences made by AI/ML models in a core network function that were put to use on the actor (or in some possible example implementations, for all core network functions in the network); or
   - the number of inferences made by AI/ML models in a management function that were put to use on the actor (or in some possible example implementations, for all management functions in the network).
14. The number of inferences made by AI/ML models (e.g., in the last 'N' time units) within a geographical area that were put to use on the actor (e.g., applicable for all managed objects therein).
15. The number of inferences made by AI/ML models (e.g., in the last 'N' time units) within a technology domain that were put to use on the actor.
16. The time since last (re)training/updating of all AI/ML models within a managed object, such as:
   - the time since last (re)training/updating of all AI/ML models in a UE (or in some possible example implementations, for all UEs associated to the network);
   - the time since last (re)training/updating of all AI/ML models in a base station, such as a gNodeB or the like (or in some possible example implementations, for all base stations in the network);
   - the time since last (re)training/updating of all AI/ML models in a core network function (or in some possible example implementations, for all core network functions in the network); or
   - the time since last (re)training/updating of all AI/ML models in a management function (or in some possible example implementations, for all management functions in the network).
17. The time since last (re)training/updating of all AI/ML models within a geographical area (e.g., applicable for all managed objects therein).
18. The time since last (re)training/updating of all AI/ML models within a technology domain.
19. The time since last inference made by all AI/ML models within a managed object, such as:
   - the time since last inference made by all AI/ML models in a UE (or in some possible example implementations, for all UEs associated to the network);
   - the time since last inference made by all AI/ML models in a base station, such as a gNodeB or the like (or in some possible example implementations, for all base stations in the network);
   - the time since last inference made by all AI/ML models in a core network function (or in some possible example implementations, for all core network functions in the network); or
   - the time since last inference made by all AI/ML models in a management function (or in some possible example implementations, for all management functions in the network).
20. The time since last inference made by all AI/ML models within a geographical area (e.g., applicable for all managed objects therein).
21. The time since last inference made by all AI/ML models within a technology domain.
22. The time since last inference made by all AI/ML models within a managed object that was put to use on the actor, such as:
   - the time since last inference made by all AI/ML models in a UE that was put to use on the actor (or in some possible example implementations, for all UEs associated to the network);
   - the time since last inference made by all AI/ML models in a base station, such as a gNodeB or the like, that was put to use on the actor (or in some possible example implementations, for all base stations in the network);
   - the time since last inference made by all AI/ML models in a core network function that was put to use on the actor (or in some possible example implementations, for all core network functions in the network); or
   - the time since last inference made by all AI/ML models in a management function that was put to use on the actor (or in some possible example implementations, for all management functions in the network).
23. The time since last inference made by all AI/ML models within a geographical area that was put to use on the actor (e.g., applicable for all managed objects therein).
24. The time since last inference made by all AI/ML models within a technology domain that was put to use on the actor.
25. The type of all AI/ML models (e.g., supervised learning, unsupervised learning, reinforcement learning, federated learning, etc.) within a managed object, such as:
   - the type of all AI/ML models in a UE (or in some possible example implementations, for all UEs associated to the network);
   - the type of all AI/ML models in a base station, such as a gNodeB or the like (or in some possible example implementations, for all base stations in the network);
   - the type of all AI/ML models in a core network function (or in some possible example implementations, for all core network functions in the network); or
   - the type of all AI/ML models in a management function (or in some possible example implementations, for all management functions in the network).
26. The type of all AI/ML models within a geographical area (e.g., applicable for all managed objects therein).
27. The type of all AI/ML models within a technology domain.
28. The ML QoS (Quality of Service) (e.g., comprising of accuracy, mean squared error, mean absolute error, or any other suitable measure) and/or ML QoT (Quality of Trustworthiness) (e.g., comprising of robustness, fairness, explainability, or any other suitable measure) of all AI/ML models within a managed object, such as:
   - the ML QoS and/or ML QoT of all AI/ML models in a UE (or in some possible example implementations, for all UEs associated to the network);
   - the ML QoS and/or ML QoT of all AI/ML models in a base station, such as a gNodeB or the like (or in some possible example implementations, for all base stations in the network);
   - the ML QoS and/or ML QoT of all AI/ML models in a core network function (or in some possible example implementations, for all core network functions in the network); or
   - the ML QoS and/or ML QoT of all AI/ML models in a management function (or in some possible example implementations, for all management functions in the network).
29. The ML QoS and/or ML QoT of all AI/ML models within a geographical area (e.g., applicable for all managed objects therein).
30. The ML QoS and/or ML QoT of all AI/ML models within a technology domain.
31. The computation usage, memory usage and/or energy usage (or any other suitable resource usage) of all AI/ML models within a managed object, such as:
   - the computation usage, memory usage and/or energy usage in a UE (or in some possible example implementations, for all UEs associated to the network);
   - the computation usage, memory usage and/or energy usage in a base station, such as a gNodeB or the like (or in some possible example implementations, for all base stations in the network);
   - the computation usage, memory usage and/or energy usage in a core network function (or in some possible example implementations, for all core network functions in the network); or
   - the computation usage, memory usage and/or energy usage in a management function (or in some possible example implementations, for all management functions in the network).
32. The computation usage, memory usage and/or energy usage within a geographical area (e.g., applicable for all managed objects therein).
33. The computation usage, memory usage and/or energy usage within a technology domain.
34. An AI/ML model usage index KPI that is indicative of the ratio of the total number of inferences made by an AI/ML model against the total number of inferences made by all AI/ML models, covering different granularities, including, similar to the above examples, managed object, geographical location, technology domain. Notably, the higher the value for this KPI may generally be considered to indicate that the deployed AI/ML models are being utilized effectively and thereby helping the operator to understand the extent of AI/ML model usage to accordingly take appropriate optimization actions.
35. An average AI/ML model usage index KPI that is indicative of the ratio of the total number of inferences made by all AI/ML models against the total number of AI/ML models, covering different granularities, including, similar to the above examples, managed object, geographical location, technology domain. Notably, the higher the value for this KPI may generally be considered to indicate that the deployed AI/ML models are being utilized effectively and thereby helping the operator to understand the extent of AI/ML model usage to accordingly take appropriate optimization actions.
36. An AI/ML model inference usage index KPI that is indicative of the ratio of the count of inferences that were put to use against the count of all the inferences that were made by each or all of the AI/ML models deployed within a managed object, a geographical location, or a technology domain. Notably, in some possible implementations, the value of "1" (or any other suitable value) may be used to indicate that all inferences were put to use on the actor. Additionally, this may help the operator to not consider the feedback from the actors when the actual manifestation of the inference is low.

It may be worthwhile to highlight that the above are merely provided as illustrative examples for possible implementations of the operational statistics/KPIs but should not be understood to constitute a limitation of any kind. As can be understood and appreciated by the skilled person, any other suitable statistics/KPIs may be defined or used, depending on various implementations and/or circumstances. It is also noted that, the above illustrative examples may sometimes refer to "AI/ML models" (or "all AI/ML models"), as can be understood and appreciated by the skilled person, the respective example statistics/KPIs may be determined in a per AI/ML model manner (i.e., for individual AI/ML model), depending on various implementations and/or circumstances.

Furthermore, it is to be noted that, in some possible implementations, if the AI/ML models are trained and deployed in a non-3GPP entity while the inference(s) from such AI/ML models are used on the 3GPP managed objects, then all the above AI/ML related operational statistics may be understood to be applicable in the context of AI/ML models "acting on" a managed object (e.g., UE, gNodeB, core network function, management function) rather than AI/ML models "within" a managed object. The same also applies to cases related to geographical location and technology domain. Thus, repeated description thereof is omitted for the sake of conciseness.

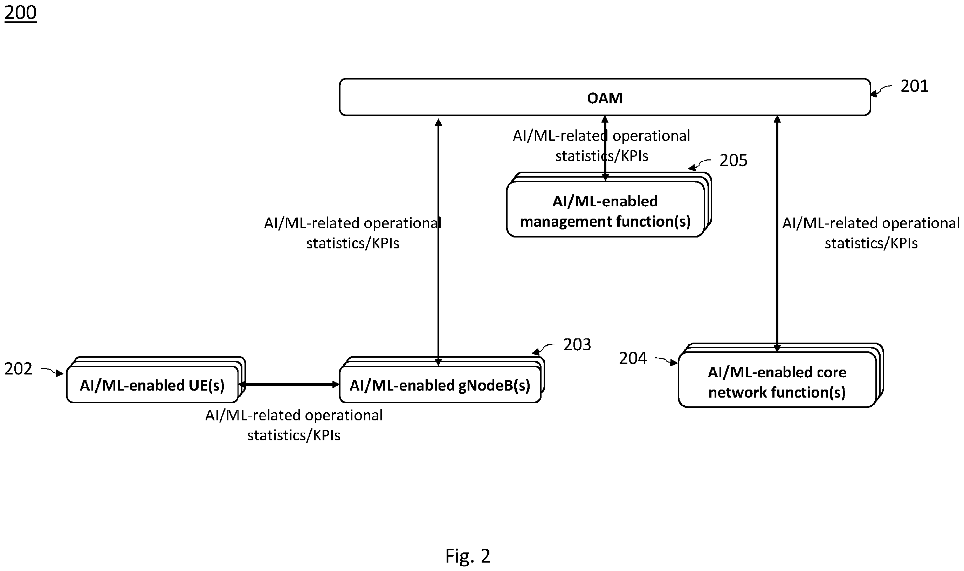

As shown in Figure 2, which schematically illustrates an example of a high-level system overview 200 according to some example embodiments of the present disclosure, the above-mentioned AI/ML related operational statistics/KPIs (or any other suitable ones) may be collected/stored within a single technology domain. For instance, AI/ML-enabled UE(s) 202 may be configured to collect the AI/ML related operational statistics/KPIs and transmit the same to AI/ML-enabled gNodeB(s) 203 (where those UE related operational statistics/KPIs may be (e.g., temporarily) stored). Notably, in some possible implementations (although not explicitly shown in the figures), the AI/ML related operational statistics/KPIs associated with the UE(s) may alternatively or additionally be requested by and/or reported to AI/ML-enabled core network function(s) 204 and/or AI/ML-enabled management function(s), or the like, as can be understood and appreciated by the skilled person. Similarly, AI/ML-enabled gNodeB(s) 203, AI/ML-enabled core network function(s) 204, and/or AI/ML-enabled management function(s) may also be configured to collect (and possibly also store) respective AI/ML related operational statistics/KPIs. These AI/ML related operational statistics/KPIs may later be sent to the OAM 201, for example on a periodical or request-response basis.

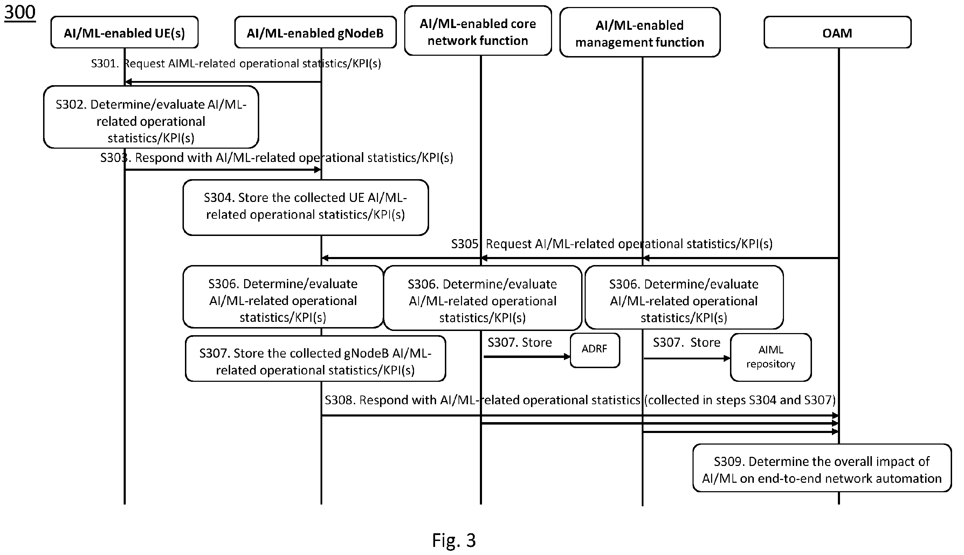

Figure 3 schematically illustrates an example of a signaling/messaging sequence flow 300 according to some example embodiments of the present disclosure, in order to support the collection and reporting of AI/ML related operational statistics/KPIs, for example in end-to-end communications (e.g., mobile) networks.

In particular, as step S301, each base station (e.g., gNodeB or the like) may request one or more UEs within their coverage area to report on their respective AI/ML-related operational statistics and/or KPI(s). In some possible implementations, the request may include filters (for example based on the AI/ML operational statistics described above, such as suitable UE ID (identifier), geographical area, or the like) and reporting characteristics (e.g., periodicity of reporting, reporting thresholds, reporting format, etc.).

At step S302, each UE may then determine/evaluate the required AI/ML-related operational statistics and/or KPI(s) (e.g., all or a subset of thereof depending on the request).

At step S303, each UE may report the determined/evaluated AI/ML-related operational statistics/KPIs back to the gNodeB that has requested the report as per the reporting characteristics (e.g., periodicity, format, or the like).

At step S304, each gNodeB may be configured to collect, and if necessary, also store all AI/ML-related operational statistics and/or KPI(s) reported by the associated UEs (in step 303) within its respective coverage area. As can be understood and appreciated by the skilled person, the reported AI/ML-related operational statistics/KPIs may be stored in any suitable place, e.g., locally and/or in a predetermined/preconfigured network location.

In some possible implementations, particularly during a UE handover procedure, the source gNodeB may directly send the associated AI/ML related operational statistics and/or KPI(s) of the said UE (i.e., under the handover procedure) to the target gNodeB (e.g., over the Xn interface).

At step 305, the OAM may request gNodeB(s), core network functions, and/or management functions to report on their respective AI/ML-related operational statistics and KPI(s). Similarly as illustrated above, the request may also include suitable filters (e.g., based on the AI/ML operational statistics and/or KPI(s) described above, any suitable network entity ID, geographical area, or the like) and reporting characteristics (e.g., periodicity of reporting, reporting thresholds, reporting format, etc.).

Accordingly, at step S306, each network entity (e.g., base station, core network entity, management entity) may be configured to determine/evaluate the corresponding required AI/ML-related operational statistics and/or KPI(s) (e.g., as specified in the respective request received from the OAM).

At step S307, each network entity may be configured to store the AI/ML-related operational statistics and KPI(s) determined/evaluated in step S306. For example, in some possible (non-limiting) implementations, the gNodeB may store them locally, the core network function may store them in the ADRF (Analytics Data Repository Function) entity, and the management function may store them in an AI/ML repository function. Of course, as can be understood and appreciated by the skilled person, these AI/ML-related operational statistics/KPIs may be stored in any suitable place, e.g., locally and/or in a predetermined/preconfigured network location.

Subsequently, at step S308, each network entity may be configured to report the determined/evaluated AI/ML-related operational statistics and/or KPI(s) back to the OAM as per the reporting characteristics (e.g., periodically or on request). Additionally, in some possible implementations, the gNodeB may also report all AI/ML-related operational statistics and/or KPI(s) reported by the UE(s) (in step 303) within its coverage area to OAM (e.g., if requested by OAM). Alternatively, in some other possible implementations, the gNodeB may be configured to consolidate/aggregate all AI/ML-related operational statistics and KPI(s) reported by the UEs (e.g., such as points 34 to 36 as mentioned above) and then send it to the OAM.

Finally, at step S309, based on the received/reported end-to-end AI/ML operational statistics and/or KPIs, the OAM may be enabled to perform the AI/ML operation evaluation, in order to make an informed decision regarding AI/ML-based operations for end-to-end network automation. For instance, in some possible implementations, the operation evaluation may involve determining/evaluating at least one of the following:
- Overall AI/ML inventory for bookkeeping. For instance, this may be determined based on the above-mentioned points 1 to 9.
- Overall AI/ML usage efficiency KPIs. For instance, this may be evaluated as described in the above points 10 to 15 and 34 to 36.
- Overall network automation level resulting from AI/ML. For instance, this may be evaluated based on the above-mentioned points 10 to 27. In some possible implementations, this may also be evaluated based on the number of actions executed for a use case determined based on AI/ML based inferences and rule-based inferences, e.g., if a VNF (Virtualized Network Functions) scaling action is executed 100 times in the last 24 hours where 30 times were based on rule-based algorithm while 70 times were based on AI/ML-based algorithm, the network automation level may be considered 'high'.
- Overall trustworthiness level of AI/ML. For instance, this may be evaluated based on the above-mentioned points 28 to 30, for example by aggregating all the corresponding reported values by AI/ML-enabled network entities.
- Overall computational/memory/energy usage resulting from AI/ML. For instance, this may be evaluated based on the above-mentioned points 31 to 33, for example by aggregating all the corresponding reported values by AI/ML-enabled network entities.

Accordingly, the informed decision may involve at least one of: AI/ML model book-keeping, AI/ML model auditing, AI/ML model retraining, AI/ML model updating, AI/ML model activation/deactivation, AI/ML model performance measurement(s), or AI/ML model trustworthiness measurement (s), etc.

Of course, as can be understood and appreciated by the skilled person, the OAM may certainly be configured to perform any other suitable determination/evaluation as well as informed decision, depending on various circumstances and/or requirements.

Configured as proposed above, the communications network (e.g., the OAM entity of the network) may be enabled to collect suitable AI/ML-related operational statistics/KPIs associated with the communications network, thereby making an informed decision regarding AI/ML-based operations for end-to-end network automation as illustrated above. For ease of understanding, as a possible illustrative example, the base station (e.g., gNB) may be deployed with many ML models for some or all the use cases described above. The statistic/KPI obtained as the ratio of the count of inferences made by all ML models against the total number of ML models deployed within a managed object as proposed above may help to calculate the number of inferences made from all these models. Accordingly, this will help to understand whether the ML models are generating enough inferences that can be used to optimize the network. As another possible illustrative example, the base station (e.g., gNB) may be deployed with an ML model for network and is making inferences for the predicted cell to which the new call is to be routed since the current cell is in the energy saving state. If the inference of the model indicates the cell to be "Cell 5", the actor (gNB in this case) may route the call to "Cell 5" or might not for various reasons like, "Cell 5 is already in Energy saving state and not able to take up new calls. In this case, this inference is made but not put to use. According, the corresponding KPI may be considered to be important for the network to know and make appropriate corrections to the model.

For the sake of completeness, it is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

It should also be noted that the apparatus (or system) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the source/target gNB, MN, SN, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

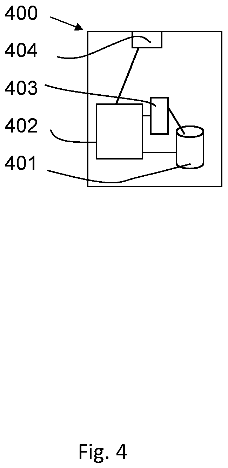

An illustrative (non-limiting) example for such an apparatus 400 is schematically shown in Figure 4. The apparatus 400 may be configured to implement a UE, a base station, a core network entity, a management entity, an OAM entity, or the like, as proposed in the present disclosure. In some possible cases, the apparatus 400 may also be implemented as any suitable network node/component/element/entity for a communications system, for example, to be coupled to and/or for controlling a station of an access system, such as a RAN node, e.g. a base station, eNB or gNB, a relay node or a core network node such as an MME or S-GW or P-GW, or a core network function such as AMF, SMF, LMF, a server or host, or in some possible implementations, a UE. Depending on various implementations, the method as described in the present disclosure may be implemented in a single apparatus or across more than one apparatus. The apparatus may be integrated with or external to a node or module of a core network, RAN, or the like. In particular, apparatus 400 may be arranged to provide control of communications in the service area of the system. The apparatus 400 may comprise at least one memory 401, at least one data processing unit (or circuitry) 402, 403, and an input/output interface 404. Via interface 404 the apparatus 400 may be coupled to any other suitable component (e.g., a receiver and/or a transmitter) of the apparatus 400, or to any other suitable other apparatus(es). In some possible examples, the receiver and/or the transmitter may be implemented as a radio front end or a remote radio head, depending on various implementations and/or circumstances.

Yet in some other example embodiments, there is provided a respective apparatus (e.g., implementing the UE, the base station, the OAM, etc., as described above) that comprises respective means configured to at least perform the respective steps as described above.

According to some further example embodiments, there are also provided corresponding methods suitable to be carried out by suitable apparatuses (network elements/nodes/components) as described above, such as the UE, the base station, the OAM, or the like.

It is to be noted that examples of embodiments of the disclosure are applicable to various different network configurations. In other words, the examples shown in the above-described figures, which are used as a basis for the above-discussed examples, are only illustrative and do not limit the present disclosure in any way. That is, additional further existing and proposed new functionalities available in a corresponding operating environment may be used in connection with examples of embodiments of the disclosure based on the principles defined.

It should also be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiments outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

Yet further, it may be worth noting that the proposed measurements/statistics/KPIs may be considered to be contributed to different SDOs (Standardisation Organisations) according to the respective use cases. For instance, below is one possible embodiment for SA5 proposing the measurements in 3GPP TS 28.552.

### 5.X ML performance measurements for NFs

### 5.X.1 ML model usage efficiency measurements

a) This measurement provides the usage efficiency of all the ML models deployed in a NF using the ratio of the inferences made and the models deployed in the NF.
b) OM
c) This measurement is obtained as the ratio of the sum of inferences made by all ML models against the total number of ML models deployed within a managed object.
d) A single float value
e) ML.ModelUsagelndex
f) GNBCUCPFunction (for 3 split scenario)
   GNBCUUPFunction (for 3 split scenario)
   GNBCUFunction (for 2 split scenario)
   AMFFunction
   SMFFunction
   UPFFunction
   N31WFFunction
   PCFFunction
   AUSFFunction
   UDMFunction
   UDRFunction
   UDSFFunction
   NRFFunction
   NSSFFunction
   SMSFFunction
   LMFFunction
   NWDAFFunction
   NGEIRFunction
   SEPPFunction
   EASFunction
   EESFunction
   ECSFunction
g) Valid for packet switched traffic.
h) 5GS.

### 5.X.2 ML model inference usage measurements

a) This measurement provides the inference usage efficiency of all the ML models deployed in a NF using the ratio of the inferences those were put to use and all the inferences made by all the ML models deployed in the NF.
b) OM
c) This measurement is obtained as the ratio of the sum of all the inferences that were put to use on the actor against the sum of all the inferences that were made by all ML models deployed within a managed object.
d) A single float value
e) ML.ModelInferenceUsageIndex
f) GNBCUCPFunction (for 3 split scenario)
   GNBCUUPFunction (for 3 split scenario)
   GNBCUFunction (for 2 split scenario)
   AMFFunction
   SMFFunction
   UPFFunction
   N31WFFunction
   PCFFunction
   AUSFFunction
   UDMFunction
   UDRFunction
   UDSFFunction
   NRFFunction
   NSSFFunction
   SMSFFunction
   LMFFunction
   NWDAFFunction
   NGEIRFunction
   SEPPFunction
   EASFunction
   EESFunction
   ECSFunction
g) Valid for packet switched traffic.
h) 5GS.

Another possible embodiment that may be used as a new content for the above-mentioned specification may be as follows.

### 5.X ML performance measurements for NFs

### 5.X.1 ML model usage efficiency measurements

a) This measurement provides the usage efficiency of all the ML models deployed in a NF using the ratio of the inferences made and the models deployed in the NF.
b) OM
c) This measurement is obtained as the ratio of the count of inferences made by all ML models against the total number of ML models deployed within a managed object.
d) A single float value
e) ML.ModelUsagelndex
f) ManagedElement
g) Valid for packet switched traffic.
h) 5GS.

For instance, the gnb is deployed with many ML models for some or all the use cases described above. This KPI helps to calculate the number of inferences made from all these models. This will help to understand whether the ML models are generating enough inferences that can be used to optimize the network.

### 5.X.2 ML model inference usage measurements

a) This measurement provides the inference usage efficiency of all the ML models deployed in a NF using the ratio of the inferences those were put to use and all the inferences made by all the ML models deployed in the NF.
b) OM
c) This measurement is obtained as the ratio of the sum of all the inferences that were put to use on the actor against the sum of all the inferences that were made by all ML models deployed within a managed object.
d) A single float value
e) ML.ModelInferenceUsageIndex
f) ManagedElement
g) Valid for packet switched traffic.
h) 5GS.

For instance, the gnb is deployed with a ML model for network and is making inferences for the predicted cell to which the new call is to be routed since the current cell is in the energy saving state. If the inference of the model indicates the cell to be "Cell 5", the actor (gnb) may route the call to "Cell 5" or might not for various reasons like, "Cell 5 is already in Energy saving state and not able to take up new calls. In this case, this inference is made but not put to use. This KPI is important for the network to know and make appropriate corrections to the model.

## Claims

1. A first network element configured for supporting collection and/or evaluation of artificial intelligence / machine learning, AI/ML, -related operational statistics in a communications network, the first network element comprising:
at least one processor; and
at least one memory storing instructions that, when executed by the at least one processor, cause the first network element at least to:
determine one or more AI/ML-related operational statistics associated with the first network element; and
report the determined one or more AI/ML-related operational statistics to a second network element of the communications network.

2. The first network element according to claim 1, wherein the one or more AI/ML-related operational statistics are reported to the second network element in a periodic manner.

3. The first network element according to claim 1 or 2, wherein the first network element is further caused to, before reporting the one or more AI/ML-related operational statistics to the second network element:
receive, from the second network element, a request for reporting one or more AI/ML-
related operational statistics associated with the first network element; and
wherein the one or more AI/ML-related operational statistics are reported in response to the received request.

4. The first network element according to claim 3, wherein the request for reporting the one or more AI/ML-related operational statistics comprises information indicative of at least one to-be-reported AI/ML-related operational statistic, and/or information indicative of a respective reporting characteristic; and wherein the reporting characteristic includes at least one of: a reporting periodicity, a reporting threshold, or a reporting format.

5. The first network element according to any one of the preceding claims, wherein the first network element is further caused to:
store the determined one or more AI/ML-related operational statistics locally and/or in a predetermined network location.

6. The first network element according to any one of the preceding claims, wherein
the first network element is a user equipment, UE, and the second network element is a base station or a core network entity; or
the first network element is a base station or a core network entity or a network management entity, and the second network element is an operations, administration and maintenance, OAM, entity.

7. The first network element according to claim 6, wherein
the first network element is the base station; and
the first network element is further caused to:
receive, from at least one UE, one or more AI/ML-related operational statistics associated with the at least one UE;
report the received one or more AI/ML-related operational statistics that are associated with the at least one UE to the OAM entity, or, in case of a UE handover, to a corresponding target base station; and
optionally, store the received one or more AI/ML-related operational statistics associated with the at least one UE locally and/or in a predetermined network location.

8. The first network element according to any one of the preceding claims, wherein the AI/ML-related operational statistics comprise at least one of:
a count of AI/ML models currently being trained within or acting on a managed object,
a geographical area, or a technology domain;
a count of AI/ML models currently being deployed for inference within or acting on a managed object, a geographical area, or a technology domain;
a count of AI/ML models active and/or inactive for a predetermined time period within or acting on a managed object, a geographical area, or a technology domain;
a count of inferences made by AI/ML models within or acting on a managed object, a geographical area, or a technology domain;
a count of inferences made by AI/ML models within or acting on a managed object, a geographical area, or a technology domain that were put to use;
time since the last training or updating of AI/ML models within or acting on a managed object, a geographical area, or a technology domain;
time since the last inference made by AI/ML models within or acting on a managed object, a geographical area, or a technology domain;
time since the last inference made by AI/ML models within or acting on a managed object, a geographical area, or a technology domain that was put to use;
types of AI/ML models within or acting on a managed object, a geographical area, or a technology domain;
quality of service, QoS, and/or quality of trustworthiness, QoT, metrics of AI/ML models within or acting on a managed object, a geographical area, or a technology domain;
computation usage, memory usage and/or energy usage of AI/ML models within or acting on a managed object, a geographical area, or a technology domain;
an AI/ML model usage index indicative of a ratio of a count of inferences made by an AI/ML model against a total count of inferences made by AI/ML models deployed within or acting on a managed object, a geographical location, or a technology domain;
an average AI/ML model usage index indicative of a ratio of a count of inferences made by AI/ML models against a total count of AI/ML models deployed within or acting on a managed object, a geographical location, or a technology domain; or
an AI/ML model inference usage index indicative of a ratio of a count of inferences that were put to use against a count of inferences that were made by AI/ML models deployed within or acting on a managed object, a geographical location, or a technology domain, wherein the managed object includes a UE, a base station, a core network entity, or a network management entity; and the technology domain includes a radio access network, RAN, domain, a core network domain, or a management domain.

9. A second network element configured for supporting collection and/or evaluation of artificial intelligence / machine learning, AI/ML, -related operational statistics in a communications network, the second network element comprising:
at least one processor; and
at least one memory storing instructions that, when executed by the at least one processor, cause the second network element at least to:
send, to at least one first network element of the communications network, a request for reporting one or more AI/ML-related operational statistics associated with the respective first network element; and
receive, from the respective first network element, the one or more AI/ML-related operational statistics.

10. The second network element according to claim 9, wherein the request for reporting the AI/ML-related operational statistics comprises information indicative of at least one to-be-reported AI/ML-related operational statistic, and/or information indicative of a respective reporting characteristic; and wherein the reporting characteristic includes at least one of: a reporting periodicity, a reporting threshold, or a reporting format.

11. The second network element according to claim 9 or 10, wherein the second network element is further caused to:
store the received one or more AI/ML-related operational statistics locally and/or in a predetermined network location.

12. The second network element according to any one of claims 9 to 11, wherein
the first network element is a user equipment, UE, and the second network element is a base station or a core network entity; or
the first network element is a base station or a core network entity or a network management entity, and the second network element is an operations, administration and maintenance, OAM, entity.

13. The second network element according to claim 12, wherein
the second network element is the base station; and
the second network element is further caused to:
report the received one or more AI/ML-related operational statistics associated with the UE to the OAM entity, or, in case of a UE handover, to a corresponding target base station; and
optionally, store the received one or more AI/ML-related operational statistics associated with the UE locally and/or in a predetermined network location.

14. The second network element according to claim 12, wherein
the second network element is the base station; and
the second network element is further caused to:
receive, from the OAM entity, a request for reporting one or more AI/ML-related operational statistics;
determine one or more AI/ML-related operational statistics associated with the second network element;
report, to the OAM entity, the determined one or more AI/ML-related operational statistics associated with the second network element; and
optionally, report, to the OAM entity, one or more AI/ML-related operational statistics reported by at least one UE that is associated with the second network element.

15. The second network element according to claim 12, wherein
the second network element is the OAM entity; and
the second network element is further caused to:
perform AI/ML operation evaluation based on the one or more AI/ML-related operational statistics reported by the at least one first network element, for enabling the OAM entity to make an informed decision regarding AI/ML-based operations for end-to-end network automation,
wherein, particularly,
the operation evaluation involves determining at least one of: overall AI/ML inventory, overall AI/ML usage efficiency key performance indicators, KPIs, overall network automation level resulting from AI/ML, overall trustworthiness level of AI/ML, or overall computational, memory and/or energy usage resulting from AI/ML; and
the informed decision involves at least one of: AI/ML model book-keeping, AI/ML model auditing, AI/ML model retraining, AI/ML model updating, AI/ML model activation/deactivation, AI/ML model performance measurement, or AI/ML model trustworthiness measurement.
